# EUROPEAN PATENT APPLICATION

(11) **EP 2 045 576 A1**
(43) Date of publication of application: **08.04.2009**
(21) Application number: 06781304.8
(22) Date of filing: 20.07.2006
(51) Int. Cl.: G01C 21/00, G06F 3/048, G09B 29/00

(54) **MAP DISPLAY SYSTEM, MAP DISPLAY DEVICE, MAP DISPLAY METHOD, AND MAP DISTRIBUTION SERVER**

(71) Applicant: Navitime Japan Co., Ltd., Tokyo 107-0062 (JP)
(72) Inventor: SAKAMOTO, Hiroshi, Minato-ku, Tokyo 107-0062 (JP); SHINOHARA, Takehiro, Minato-ku, Tokyo 107-0062 (JP); KANETO, Nao, Minato-ku, Tokyo 107-0062 (JP)
(74) Representative: HOFFMANN EITLE
(86) International application number: PCT/JP2006/314344
(87) International publication number: WO 2008/010276

(57) **Abstract**

A map display system having display means for displaying a map image and object display control means for displaying object images on the map image according to the location of the objects, wherein, when a cursor is moved to a desired object image and operated to select it, information on the object is displayed. The map display system has target object determination means for calculating the distances between the cursor and the individual object images and determining an object of the smallest distance to the cursor. The object display control means re-draws an object image of the target object determined by the target object determination means and displays the result on the uppermost surface of an image displayed. When a large number of object images are displayed on a map image, in areas close to each other, the user can simply recognize a desired object image and can click the object image accurately and reliably.

## Description

### TECHNICAL FIELD

The present invention relates to a map display system for displaying a map image on a display component, a map display device, and a map display method, as well as a map distribution server. In this type of map display system, an object image displays an object such as a store or establishment on a map image, and a cursor is moved onto the displayed object image and clicked to open a window for displaying detailed information on the object.

The present invention particularly relates to a map display system, a map display device, and a map display method, as well as a map distribution server, wherein, when a large number of object images such as the above are displayed in adjacent areas on a map image, the object image that is in a location where the distance from the cursor to the object image is the closest is re-drawn and displayed on the uppermost surface of the displayed images. The invention also relates to a map display system, a map display device, and a map display method, as well as a map distribution server, wherein, when the cursor is over the re-drawn object image, a change occurs in the object image and cursor display configurations, enabling the object image to be selected.

### BACKGROUND ART

Navigation devices and navigation systems in which map data and road data are used to search routes from a given departure point to a destination so as to guide users are conventionally known, and practical use has been made of communications type navigation systems as such navigation devices and navigation systems, wherein car navigation devices and mobile telephones that are installed in automobiles to guide drivers through routes are used as navigation terminals to transmit route search requests to a route search server and to receive the results and accept route guidance.

Communications type navigation systems in particular, which are systems featuring the use of portable terminals such as mobile telephones as navigation terminals, are used as navigation systems for pedestrians. Navigation systems for pedestrians also include navigation systems to which are preferably added a route guidance function including transportation systems, and which include a function for, in addition to walking route search and guidance, storing transportation system route lines or timetables in a route search server, and providing guidance for routes from a given departure station to a given destination station (potential train routes) in addition to walking route search and guidance. There are also transportation guidance systems for receiving and displaying distributed information without walking route searching, such as transportation system lines or timetables and trains which can be boarded, that is transmitted from a data distribution server.

Route search devices and route search methods employed in common navigation devices and communications navigation systems have been disclosed, for example, in Patent Document 1 below (Japanese Laid-Open Patent Application No. 2001-165681). Such navigation systems are devised so as to transmit departure point and destination data from a portable navigation terminal to a data distribution server, and to search and provide guidance for routes that match the search conditions from the road network or transportation network in the data distribution server. Search conditions include traveling means from the departure point to the destination, such as walking, driving an automobile, or both taking the train and walking, and routes are searched using this as a search condition.

The data distribution server is provided with the roads (routes) of map data as connection points, the position of directional change points as nodes, the routes connecting the nodes as links, and the cost information (distance and required time) of all links as a database. The data distribution server sequentially searches links from the node of a departure point to the node of a destination with reference to the database, and can provide guidance on the shortest route to the portable navigation terminal by following nodes and links for which the cost information is lowest to produce a guidance route. A method referred to as the label determination method or the Dijkstra method is used as such a route search method. A route search method using the Dijkstra method has also been disclosed in Patent Document 1 noted above.

Route search systems for searching routes using transportation systems are provided with a timetable database, the database being compiled from timetable data for various transportation systems based on route search conditions specified by the user, such as departure time, departure point, destination, and arrival time, as well as data for which the database is compiled from transportation networks based on the above. These databases are used to link the departure point and destination, including connections (transfers), to sequentially follow each transportation means that can be used (individual train or bus lines) as routes, and to propose one or more potential guidance routes that match the route search conditions (starting station, destination station, line, train or other transportation means). Conditions such as required time, number of connections, and fare are also generally used as route search conditions.

Guidance systems that have been proposed as transportation system-related searching and guidance systems include guidance systems that can connect from a terminal device such as a mobile telephone to a data distribution server providing guidance on transportation system-related route data and timetable data, and that can specify a given departure station, departure time, destination station, or the like and receive data on transportation means, such as trains and railways or lines that can be boarded, for display on the terminal device. In the configuration commonly adopted for such use with terminal devices, address data such as a domain name or URL (uniform resource locator) for specifying the location where the data to be downloaded is located is input into the terminal device to access the data distribution server (data site) specified by the address and download the desired data.

In the same manner as the road network data in on-board automobile navigation systems or pedestrian navigation systems, the route search data in navigation systems and the like for searching and providing guidance on routes utilizing transportation systems includes data in which the stations on the transportation lines serve as nodes and the stations are networked through links in both direction, as well as link cost data comprising the link timetables and time taken for each transportation means along each transportation line. There are also systems for which fare data is added to provide guidance on the fare of the proposed guide routes as well.

Recently, portable terminals such as mobile telephones have been provided with a browser to enable access to the Internet in order to obtain desired data. In this type of system, the user manipulates the portable terminal to use a search engine or the like with which the browser is equipped in order to find a desired site and download the site contents and to browse the contents using the browser. The contents comprise data belonging to various categories, including information on stores and events, railway timetables, and railway connections.

To obtain information on stores or events, a user manipulates the portable terminal to input and search store or event categories and areas that are to be searched. The server searches for stores or events that match the specified categories and that are in the relevant areas, and the information is distributed to the portable terminal device. When the user manipulates the portable terminal to specify a route in order obtain timetables, the timetables for the relevant routes are displayed on the screen of the display device of the portable terminal. To obtain connection guidance, the user specifies a departure point or destination, and the recommended routes are thereby displayed.

It is also possible to connect to a map server on the Internet from a terminal device such as a personal computer or mobile telephone and to input a given location, establishment or store address, name, telephone number or the like to download map data of a certain range including the location of the point, establishment, or store and to display a map image on a display device.

The map is displayed in the following manner on the terminal device used in systems such as those described above. That is, in this type of map display device, an object image showing an object such as a store or establishment is displayed on a map image that is displayed on a display screen. The user can move and click a cursor on the object image being displayed on the display screen to open a window for displaying detailed information on the relevant object. The user can thus select the object image of significance from among object images displayed on the map to find detailed information on the relevant object.

However, several such object images may sometimes be displayed in adjacent areas on the map image, and in such cases several object images may be displayed in such a way as to be densely overlapping each other. Even when the user moves the cursor in order to select an object, a drawback in such display scenarios is that it may not be possible to clearly distinguish which object image is to be selected by the cursor.

The invention of a map display system and map display method for overcoming such a drawback have been disclosed, for example, in the following Patent Document 2 (Japanese Laid-Open Patent Application No. 2003-337041). The map display system disclosed in Patent Document 2 is configured in such a way that map data and establishment data stored in a data storage component are read through an I/O circuit, an integration process for integrating the plurality of establishment data from among the read establishment data is run, the read map data is drawn to VRAM, and the establishment data that has been integrated by the integration process is drawn using an integrated establishment icon, which is an image representing the results of the integration, and displayed on a monitor. The user can select the integrated establishment icon to display a list of the establishments included in the integrated icon and select the desired establishment.

The map display device disclosed in Patent Document 3 below (Japanese Laid-Open Patent Application No. 2001-317955) is configured in such a way that, when overlapping icons must be displayed in cases where icons showing establishments such as landmarks are displayed on a map, a plurality of icons displayed in a same location or partially overlapping locations are displayed through the timed sequential alternation of icons in a foremost surface on which all are displayed. When the desired icon is displayed on the foremost surface of the display, the user can select the icon to refer to a detailed explanation or the like on that icon.
[Patent Document 1]
   Japanese Laid-Open Patent Application No. 2001-165681 (FIGS. 1 and 2)
[Patent Document 2]
   Japanese Laid-Open Patent Application No. 2003-337041 (FIGS. 2, 3, and 7)
[Patent Document 3]
   Japanese Laid-Open Patent Application No. 2001-317955

### DISCLOSURE OF THE INTENTION

### [Problems the Invention Is Intended To Solve]

As noted above, a plurality of object images may sometimes be displayed in adjacent areas in a map display device in which object images showing objects such as stores or establishments are displayed on a map image, and a cursor is moved and clicked on the displayed object images to display detailed information on the objects.

However, when a user selects a desired icon to display detailed information in cases where such map images are displayed using the map display method disclosed in Patent Document 2 above, there are problems in that speed is compromised by the need for a two-step operation in which first an integrated icon is selected and a list of establishments included in the integrated icon that is displayed is thereby displayed, and the desired establishment is then selected from the list. Another problem is that it is difficult to distinguish which facilities are included in the integrated icon.

Furthermore, in cases where such map images are displayed using the map display method disclosed in Patent Document 3 above, there are also problems in that, when the user selects the desired icon to display the detailed information, the desired icon is selected when the icon is displayed on the foremost surface of the display, and the desired icon therefore cannot be selected until the user waits through the sequence in which the icons are displayed on the foremost surface of the display; it is also possible that an icon other than the desired icon may be selected.

As a result of extensive research to solve the problems described above, the inventors of the present invention perfected the present invention upon finding that the problems described above can be solved when an object image that is in a location where the distance from the cursor to the object image is the closest is re-drawn and displayed on the uppermost surface of the display images in cases where a large number of object images are displayed in adjacent areas on a map image in a map display system in which a cursor is moved and clicked on an object image displayed on a map image to open a window that displays detailed information on that object.

The present invention was also perfected upon ascertaining that the problems described above can be solved by changing the object image and cursor display configurations when the cursor is over the re-drawn object image, enabling the object image to be selected.

That is, an object of the present invention, which is intended to solve the problems described above, is to provide a map display system, map display device, and map display method, as well as a map distribution server which allow users to readily distinguish desired object images in cases where a large number of object images are displayed in adjacent areas on a map image, and allow the object images to be accurately and reliably clicked.

### [Means for Solving the Abovementioned Problems]

In order to solve the problems described above, a first aspect of the invention is a map display system for displaying object information related to a certain object when a cursor is moved over a desired object image to select the object image, comprising display means for displaying a map image, and object display control means for displaying object images on the map image according to the locations of the objects, the map display system being characterized in that:
the map display system comprises target object determination means for calculating the distance between a cursor position and the position of each object image to determine the object having the shortest distance; and
the object display control means re-draws the object image of the target object determined by the target object determination means and displays the image on the uppermost surface of the displayed images.

In the first aspect of the invention, when the cursor location is over the object image of the target object, the object display control means preferably changes and draws the object image and cursor image display configurations, and the cursor operation sensing means preferably enables the display of the object information related to the target object to be controlled.

In the first aspect of the invention, the cursor is preferably a cross-shaped cursor, and when the cursor location is over the object image of the target object, the object image is preferably re-drawn as a display configuration emphasizing the object image, and the cursor display configuration is preferably changed to a pointer image.

In the first aspect of the invention, when the object comprises different objects located in a building of a same establishment, the center position of each object image is preferably set so as to be in a different location; and
the object display control means preferably displays object images based on the location information for each of the object images.

A second aspect of the invention is a map display device for displaying object information related to a certain object when a cursor is moved over a desired object image to select the object image, comprising display means for displaying a map image, and object display control means for displaying object images on the map image according to the locations of the objects, the map display device being characterized in that:
the map display device comprises target object determination means for calculating the distance between a cursor position and the position of each object image to determine the object having the shortest distance; and
the object display control means re-draws the object image of the target object determined by the target object determination means and displays the image on the uppermost surface of the displayed images.

In the second aspect of the invention, when the cursor location is over the target object image, the object display control means preferably changes and draws the object image and cursor image display configurations, and the cursor operation sensing means preferably enables the display of the object information related to the target object to be controlled.

In the second aspect of the invention, the cursor is preferably a cross-shaped cursor, and when the cursor location is over the object image of the target object, the object image is preferably re-drawn as a display configuration emphasizing the object image, and the cursor display configuration is preferably changed to a pointer image.

In the second aspect of the invention, when the object comprises different objects located in a building of a same establishment, the center position of each object image is preferably set so as to be in a different location; and
the object display control means preferably displays object images based on the location information for each of the object images.

A third aspect of the invention is a map display method for a map display system for displaying object information related to a certain object when a cursor is moved over a desired object image to select the object image, comprising display means for displaying a map image, and object display control means for displaying object images on the map image according to the locations of the objects,
wherein the map display system comprises target object determination means for calculating the distance between a cursor position and the position of each object image to determine the object having the shortest distance, the map display method being characterized in comprising:
a step wherein the target object determination means calculates the distance between a cursor position and the position of each object image to determine the object having the shortest distance; and
a step wherein the object display control means re-draws the object image of the target object determined by the target object determination means and displays the image on the uppermost surface of the displayed images.

The third aspect of the invention preferably has:
a step wherein, when the cursor sensing means senses that the cursor location is over the object image of the target object, the object display control means changes and draws the display configuration of the object image of the target object and the display configuration of the cursor image; and
a step wherein the cursor operation sensing means enables the display of the object information related to the target object to be controlled.

The third aspect of the invention furthermore preferably has a step wherein the cursor is a cross-shaped cursor, and when the cursor location is over the object image of the target object, the object display control means produces a display configuration emphasizing the object image of the target object, and changes the cursor display configuration to a pointer image.

The third aspect of the invention still furthermore preferably has:
a step wherein, when the object comprises different objects located in a building of a same establishment, the center position of each object image is set so as to be in a different location; and
the object display control means displays object images based on the location information for each of the object images.

A fourth aspect of the invention is a map distribution server for distributing map images to a map display system for displaying object information related to a certain object when a cursor is moved over a desired object image to select the object image, the map display device comprising display means for displaying a map image, and object display control means for displaying object images on the map image according to the locations of the objects, and comprising target object determination means for calculating the distance between a cursor position and the position of each object image to determine the object having the shortest distance, wherein the object display control means re-draws the object image of the target object determined by the target object determination means and displays the image on the uppermost surface of the displayed images, the map distribution server being characterized in that:
the map distribution server distributes object images displayed on the map image and the image locations to the map display device.

In the fourth aspect of the invention, when the object comprises different objects located in a building of a same establishment, the center position of the object image of each object is preferably set so as to be in a different location; and
the object images and the location information for each of the object images are preferably distributed to the map display device.

### [Effect of the Invention]

In the first aspect of the invention, the map display system comprises target object determination means for calculating the distance between the cursor position and the position of each object image to determine the object having the shortest distance, wherein the object display control means re-draws the object image of the target object determined by the target object determination means and displays the image on the uppermost surface of the displayed images.

According to this configuration, because the object image nearest the cursor position is always displayed on the uppermost surface of the display screen, when the user selects the desired object image with the cursor, the desired object image can be displayed on the uppermost surface of the screen and selected simply by moving the cursor, allowing the object image to be rapidly selected. It also becomes possible to reliably distinguish the desired object that is to be manipulated.

In the first aspect of the invention, when the cursor location is over the object image of the target object, the object display control means preferably changes and draws the object image and cursor image display configurations, and the cursor operation sensing means preferably enables the display of the object information related to the target object to be controlled.

According to this configuration, the object image where the cursor is located can be readily distinguished, and the display of the detailed information for the corresponding object can be controlled only when the object image where the cursor is located is clicked, thus preventing detailed information for objects not on the uppermost surface to be displayed even when those objects are accidentally selected with the cursor.

In the first aspect of the invention, the cursor is preferably a cross-shaped cursor, and when the cursor location is over the object image of the target object, the object image is preferably re-drawn as a display configuration emphasizing the object image, and the cursor display configuration is preferably specified and changed to an image. According to this configuration, the user can readily distinguish that the cursor has been manipulated to select the desired object image.

In the first aspect of the invention, when the object comprises different objects located in a building of a same establishment, the center position of each object image is preferably set so as to be in a different location, and the object display control means preferably displays object images based on the location information for each of the object images. According to this configuration, different objects in the same building can be displayed without overlapping.

The second aspect of the invention can provide a map display device according to the first aspect, and the third aspect of the invention can provide a map display method for realizing the map display system according to the first aspect. The fourth aspect of the invention can furthermore provide a map distribution server for forming the map display system according to the first aspect.

### BRIEF DESCRIPTION OF THE DRAWINGS

FIG. 1 is a structural diagram of a system, showing the configuration of a navigation system including the map display device according to the present invention;
FIG. 2 is a block diagram showing the configuration of a map distribution server connected to the map display device according to the present invention;
FIG. 3 is a block diagram showing the configuration of the map display device according to the present invention;
FIG. 4 a view showing the configuration of object data distributed to the map display device;
FIG. 5 is a front view showing the appearance of a mobile telephone used as a map display device;
FIG. 6 is a view of a display screen showing an example of the display of an object image;
FIG. 7 is a view of a display screen showing an example of the display of an object image according to the present invention;
FIG. 8 is a flowchart showing the procedure of an object image display process for the map display device according to the present invention;
FIG. 9 is a view showing an example of a display image to explain the drawing procedure when an object image undergoing the drawing process is selected as a certain distance range;
FIG. 10 is a view of an example of a display screen showing another example of the selection of an object image undergoing the drawing process;
FIG. 11 is a view of an example of a display screen showing yet another example of the selection of an object image undergoing the drawing process; and
FIG. 12 is a view of an example of a display screen showing still another example of the selection of an object image undergoing the drawing process

### [Key to Symbols]

- 10: map display system
- 12: network
- 20: map display device
- 201: control means
- 21: communication means
- 22: GPS positioning means
- 23: distribution request edit means
- 24: distribution data storage means
- 25: operation/input means
- 26: display means
- 27: object display control means
- 281: target object determination means
- 282: object selection means
- 29: cursor sensing means
- 30: map distribution server
- 31: control means
- 32: distribution data creation means
- 33: route search means
- 34: communication means
- 35: network data for searching
- 36: road network data
- 37: transportation network data
- 38: POI search means
- 39: object extraction means
- 40: map database

### BEST MODE FOR CARRYING OUT THE INVENTION

Specific examples of the present invention will be described in detail below with reference to the embodiments and drawings. However, the embodiments described below are used to exemplify a map display device and map display method for implementing the technical concepts of the present invention, are not intended to limit the present invention to this map display method and map display method, and are also equally applicable to map display devices and map display systems of other embodiments within the scope of the claims.

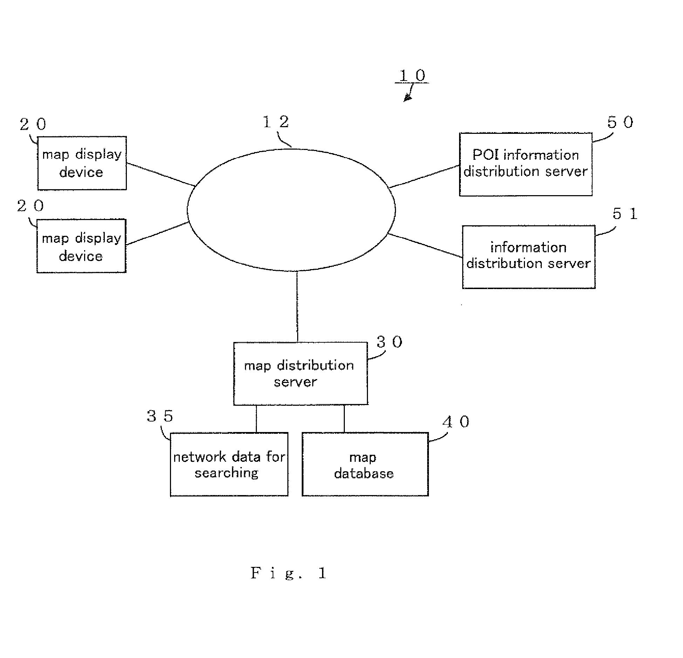

FIG. 1 is a structural diagram of a system showing the configuration of a map display system 10 including the map display device 20 according to the present invention. As shown in FIG. 1, the map display system 10 comprises a map display device 20 and a map distribution server 30 having a navigation function connected through a network 12. The map display system 10 thus functions as a navigation system.

The map display system 10 is also composed of a POI information distribution server 50 for providing POI locations, service content, and other POI information belonging to various categories, and an information distribution server 51 for providing music, images, and other content. The map distribution server 30 can retrieve the necessary data from the POI information distribution server 50 or other information distribution server 51 through the network 12 to add the data to the existing database. Search requests can also similarly be sent to the POI information distribution server or other information distribution server 51 to retrieve the desired search results.

The map display system 10 according to the present invention is not limited to the configuration described above, the map distribution server 30 may be a map distribution system that does not have a navigation service function, and the map display device 20 is not limited to a mobile phone and may be a PDA, a music player, or another portable device, or may be a personal computer (PC). The invention may also be a stand-alone type of system such as an on-board navigation system in which the map display device 20 and map distribution server 30 are integrated.

The map display device 20 can specify the current location or a desired point to send a request to the map distribution server 30 for map information of a certain range based on that current location or desired point, and display a map image on the display means based on the map information distributed from the map distribution server. The map display device 20 can also send a request to the map distribution server 30 for a search of a desired point of interest (POI), specify a POI among the POI search results from the map distribution server 30 to request map information including points where any of the POI are, and display the map image on the display mean.

The map display device 20 can furthermore specify a desired departure point and destination, send a request to the map distribution server 30 for a search of the optimal route or several potential routes from the departure point to the destination, receive map information including guidance routes in the form of the route search results from the map distribution server 30, and display the map image on the display means.

The map data distributed by the map distribution server 30 to the map display device 20 includes object information showing road or transportation routes, as well as establishments or buildings that are in the various points on the map, such as banks, post offices, government agencies, landmarks, and various POI; and object images such as icons showing these objects are displayed on the map image when the map image is displayed on the display means. The user can refer to the object images on the map image displayed on the display means to find out where those objects are located on the map.

The map display device 20 can also display a cursor on the display means, and the cursor can be moved and clicked on an object image on the displayed map image to select any object image. When an object image is selected, an information window related to that object is opened, and detailed information related to the object, such as business hours, service details, and fees when the object is a restaurant, can be displayed.

To respond to the various requests from the map display device 20, the map distribution server 30 is equipped with a map database 40 and network data for searching routes. The map data stored in the map database 40 is optimally in the form of vector-format map data as the type of map data because object images such as icons are drawn (displayed) on electronic maps. This map data also comprises unit map data divided into a grid by longitude and latitude, and when a map is requested by the map display device 20 such as a mobile telephone, map data in the form of nine adjacent grid units in the vertical, horizontal, and diagonal directions, based on grid unit map data including the current location or specified point, is transmitted to a portable terminal.

The network data for searching routes is configured as a database and comprises link cost data that includes node data, link data, and all link cost data (distance or required time) in which roads (routes) serve as connection points, in which the position of directional change points serve as nodes, and in which the routes connecting the nodes serve as links. The transportation network data also comprises data in which stations serve as nodes; and links connecting station to station, and timetable data (departure times, arrival times, required time) for each linking train or other vehicle, are stored as link cost data.

When the current location or a desired point is specified from the map display device 20 and a map distribution request including that point is received, the map distribution server 30 reads the corresponding map data from the map database 40 and distributes the data to the map display device 20. Data specifying POI such as various establishments, buildings, or landmarks located on the map are distributed along with the map data, and the map display device displays the map image on the display means and draws the various object images on the map image.

When the map distribution server 30 has received the POI search request from the map display device 20, the POI database (not shown) is referenced to search the relevant POI. POI guidance data such as the locations and names of the relevant POI is distributed to the map display device 20. On the basis of the POI guidance data, when the map request including the POI locations is received, the map database 40 is referenced to distribute the relevant map data to the map display device.

When the current location or a desired point is specified from the map display device 20 and a route search to the POI is requested, the map distribution server 30 references network data 35 for searching to search potential routes between the two points, and map data including the potential routes as guidance routes is distributed to the map display device.

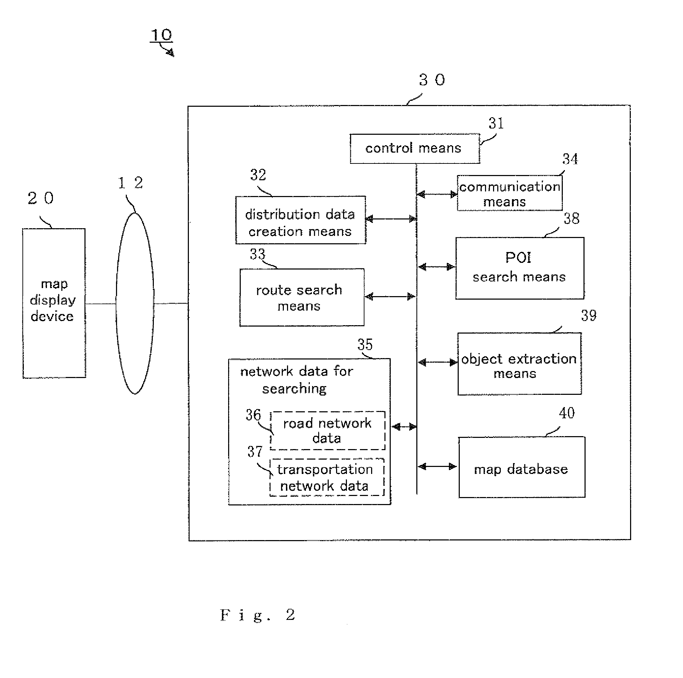

FIG. 2 is a block diagram showing the configuration of the map distribution server 30 shown in FIG. 1. The map distribution server 30 is equipped with control means 31, distribution data creation means 32, communication means 34, route search means 33, and network data 35 for searching. Road network data 36 for searching pedestrian and automobile routes and transportation network data 37 for searching routes utilizing transportation systems are stored in the network data 35 for searching.

The control means 31 is a microprocessor having RAM, ROM, and a processor (not shown), and controls the operation of each part by using a control program stored in the ROM. The communication means 34 is an interface for communicating via the network 12 with the map display device 20 or with the POI information distribution server 50 that provides a variety of POI information. The distribution data creation means 32 is used for editing the results of route and POI searches to obtain data for distribution to the map display device 20. The route search server 30 can collect POI information from the various POI information distribution servers 50 via the network 12 to update or expand the map data stored in the map database 40.

The route search means 33 is a multimodal route search engine, and has a route search function that uses both pedestrian and transportation systems. Such a route search engine has been disclosed, for example, in Japanese Laid-Open Patent Application No. 2000-258184. A well-known technique referred to as the Dijkstra method is used as the route search method, and the route search conditions and POI search conditions are transmitted from a terminal device such as the map display device 20.

POI search means 38 comprises a POI database. The POI information stored in the POI database is searched and referenced by the POI search means 38, and the POI information requested using the POI category, area, or the like specified by the map display device 20 as search conditions is searched and distributed to the map display device 20. Object extraction means 39 extracts corresponding objects such as various establishments, buildings, or landmarks on the map on the basis of the map data distributed to the map display device 20, and distributes that information along with the map data to the map display device 20.

The various types of information or data such as map data, object data, POI guidance information, and guidance route information sent to the map display device 20 is edited by the distribution data creation means 32 as needed and distributed to the map display device 20.

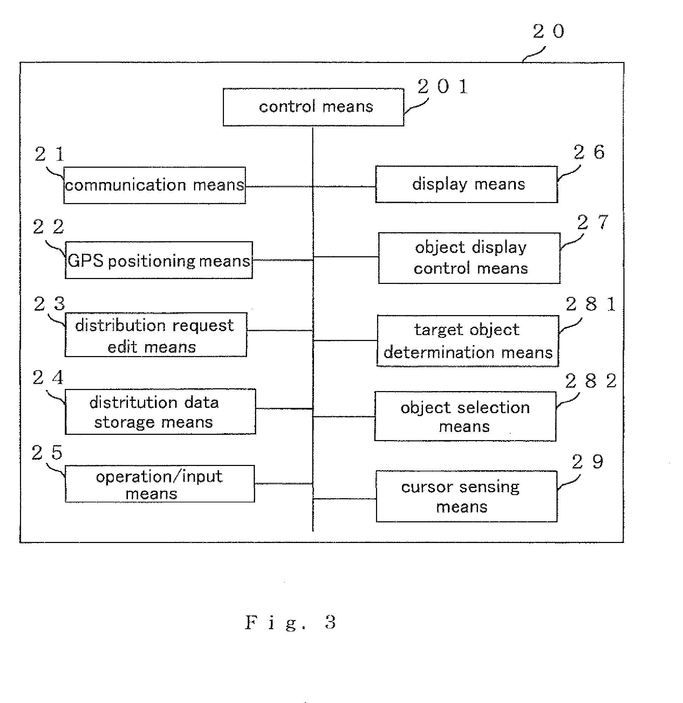

As shown in FIG. 3, the map display device 20 comprises control means 201, communication means 21, GPS positioning means 22, distribution request edit means 23, distribution data storage means 24, operation/input means 25, display means 26, object display control means 27, target object determination means 281, object selection means 282, cursor sensing means 29, and the like. The GPS positioning means 22 comprises a GPS receiver, and receives and processes a GPS satellite signal to determine the current position of the map display device 20 by longitude and latitude.

The control means 201 is a microprocessor having RAM, ROM, and a processor (not shown), and controls the operation of each part with the aid of a control program stored in the ROM. The communication means 21 is an interface for communicating with the map distribution server 30 via the network 12.

The operation/input means 25 is used for operation and input using numerical keys, alphabet keys, cursor keys, and other function keys, as well as selection keys, scroll keys, and the like, whereby a desired menu is selected from a menu screen displayed on the display means 26 as output means or, alternatively, keys are manipulated for various types of input. The display means 26 thus functions as a part the operation/input means 25. The operation/input means 25 may also be provided with a mouse or other operation means.

The distribution request edit means 23 edits POI search conditions or route search conditions input via the operation/input means 25, a menu screen displayed on the display means 26, or the like as a distribution request to be transmitted to the map distribution server 30. The results of the POI or route search performed according to POI search requests and map data distributed by the map distribution server 30 according to requests are distributed to the map display device 20 as POI information and route guidance information, and the map display device 20 temporarily stores distribution data distributed from the map distribution server 30 in the distribution data storage means 24. The distribution data such as the map data, POI information, or route guidance information stored in the distribution data storage means 24 is read as needed and displayed on the display means 26.

In the present invention, the operation/input means 25 can be used to operate a cursor key in the map image display screen displayed on the display means 26, and to click on a desired object displayed on the map image to select that object. The operation of the cursor key or the operation of selecting (operation of clicking on) an object is sensed by the cursor sensing means. This cursor sensing means 29 distinguishes the center position of the cursor (such as the center position of the cross mark of a cross-shaped cursor image) on the display screen (map image) involved in the cursor operation, and calculates the distance from each object image (center position) displayed on the map image.

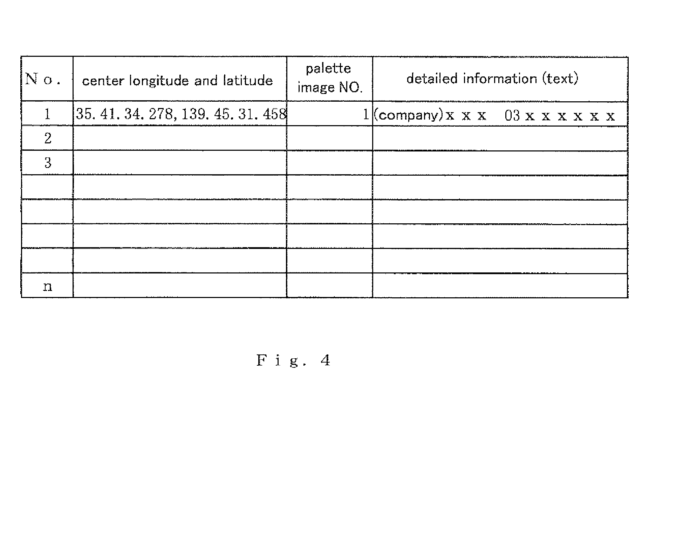

The target object determination means 281 determines, as the target object, the object image closest in terms of linear distance to the cursor position on the basis of the distance between the cursor location and the location of each object image calculated by the cursor sensing means 29. The object data included in the grid unit map data has the configuration shown in FIG. 4 and is distributed along with the map data from the map distribution server 30 to the map display device 20. As shown in FIG. 4, each of the objects 1 through n comprises detailed information (such as name and telephone number) on the objects displayed by text, palette image number showing the object image, and the longitude and latitude specifying the center position.

The palette numbers for displaying the object images have been pre-downloaded en masse from the map distribution server 30 to the map display device 20, allowing object images to be drawn on the map display device 20 when a given object location and number are specified. The technique described in Japanese Laid-Open Patent Application No. 2006-128801, for example, can be adapted for such a technique.

That is, first the screen coordinates for the longitude and latitude of the center of an icon are determined on the basis of the map center longitude and latitude as well as the map orientation and map magnification (shrinkage). Then, in the case of object images represented by 16 x 16 dots, object images are drawn based on a location that is offset eight dots in terms of X/Y coordinates from the previously determined coordinates. This drawing process is repeated for each object to the extent that object data is available. Thus, when object images overlap, the object images drawn afterward are displayed on the uppermost surface of the display screen over the previously drawn object images.

Based on the object data shown in FIG. 4, the object display control means 27 controls the drawing of various object images (such as icon images) on the basis of the location information for each object on the map image displayed on the display means 26. At that time, in cases where object images overlap in narrow areas, the images are displayed overlapping in the sequence in which they were drawn. At that point in time, it has not been specified which object images will be displayed on the uppermost surface of the display screen. Here, when the cursor is operated, the cursor sensing means 29 senses the location of the cursor and calculates the distance to each object image.

When the object closest to the cursor location is determined as the target object by the target object determination means 281, which has received information on the distance between the cursor location and each object image from the cursor sensing means 29, the object display control means carries out the process of redrawing the object image of the target object on the display means 26. Because the most recently drawn images of the images displayed on the display means 26 are displayed on the uppermost surface of the display screen, when the cursor is operated, the object image of the object in the location closest to the cursor (target object) is always displayed by this process on the uppermost surface of the display screen.

The desired object can thus be reliably distinguished and selected when the user of the map display device 20 observes the map image displayed on the display means 26 and the object images displayed on the map image, and operates the cursor until the desired object image is displayed on the uppermost surface of the screen. The distance between the cursor location and the location of each object is calculated through the determination of the distance between the respective representative locations. Here, a representative location includes, but is not limited to, for example, the coordinates in the center of a cross (center position) in the case of a cross-shaped cursor or the coordinates of the tip of a finger in the case of a pointing mark, but may also be the coordinates of an image location for specifying the cursor location as a point. Similarly, the representative location of objects may also be the coordinates of the center position of an object image, the location coordinates in the upper left corner of the object image, or the like.

The cursor sensing means 29 senses that the cursor has been operated and that the cursor location overlaps the object image of the target object (object closes to the cursor), and informs the object display control means 27. When the object display control means receives this notification, the display configuration of the target object is changed from the current display and drawn for emphatic display of the object image of the target object. For example, the target object image is changed and drawn in a display configuration in which the image is surrounded by a bold line. The user can thus readily distinguish the target object displayed on the uppermost surface of the display screen.

At the same time as this, the cursor sensing means changes the display configuration of the cursor. For example, when the cursor is a cross-shaped mark, it may be changed to a pointer mark. As a result of the change in the cursor display configuration, the cursor sensing means 29 enables control of the display of detailed information on the object when the object image under the cursor is selected (clicked). No window for displaying detailed information on the object can therefore be opened for object images that are clicked when the cursor display configuration has not been changed.

According to this control, the object image of the target object closest to the cursor is displayed on the uppermost surface of the display screen on which the map image is displayed, and when the cursor is moved to a location over the object image, the object image and cursor display configurations are changed, allowing the user to clearly distinguish that the cursor has moved to the desired object image location.

Because a window for displaying detailed information on an object can be opened only under these conditions, the user can readily recognize errors when the cursor is mistakenly placed over an object image that is not desired from among the object images. Even when an object image that is not desired is thus accidentally clicked (selected), no window for displaying detailed information will be opened, and the user will not be forced to use unnecessary operations to return to the screen.

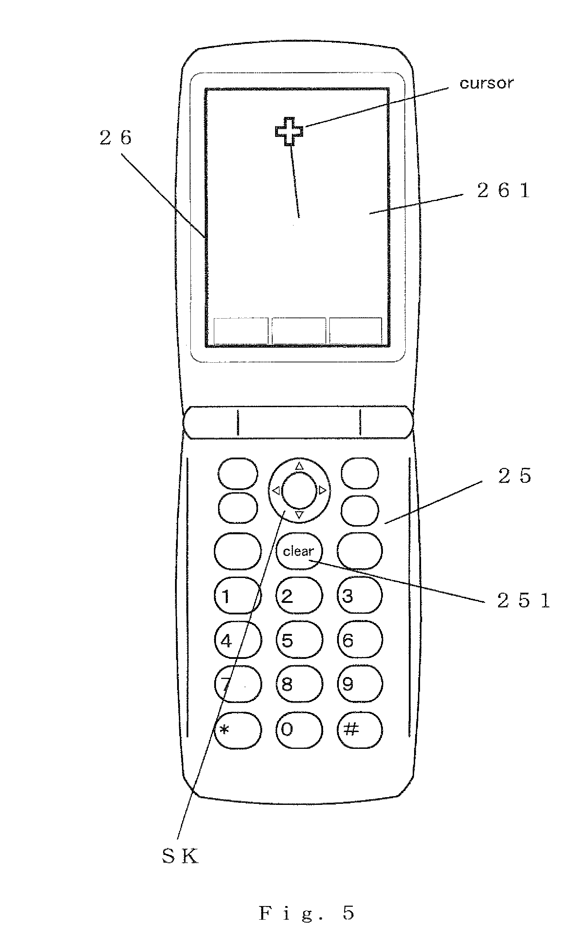

FIG. 5 is a front view showing the appearance of a mobile telephone with a navigation terminal function as the map display device 20. The map display device 20 (mobile telephone) has a display means 26 comprising a liquid crystal display unit or the like, and operation/input means 25 such as keys, buttons, or the like. A menu screen, map image, or the like is displayed on the display screen 261. A scroll key SK provided in the operation/input means 25 comprises up, down, left, and right keys as shown in FIG. 5, and when the scroll key SK is operated, the cursor (scroll cursor) image is displayed on the display screen 261, allowing the cursor to be moved up, down, left, and right.

The initial cursor location will be in the middle of the display screen 261, and a line connecting the initial location to the location where the cursor C is moved will be displayed. When the cursor is moved to the edge of the display screen 261, the map image will scroll so that the cursor position at that point in time will be in the middle of the display screen 162. Because the cursor location and the initial location are connected by a line, the cursor can be moved so as to retrace the line, and can thereby be readily returned to the initial cursor location. The clear key 251 can also be operated to clear the current input operation or the like.

In general, when the map image is initially displayed on the display screen, the current location of the map display device 20, the location of a POI, or the like will be displayed in the center of the map image. As such, even when the initial cursor location matches the current position or point of interest and the cursor is moved to scroll through the map, the cursor can be readily returned along the line back to the initial map image, affording more convenient operation. The technique disclosed in Japanese Laid-Open Patent Application No. 2003-208095, for example, can be adopted as the scroll and cursor control technique.

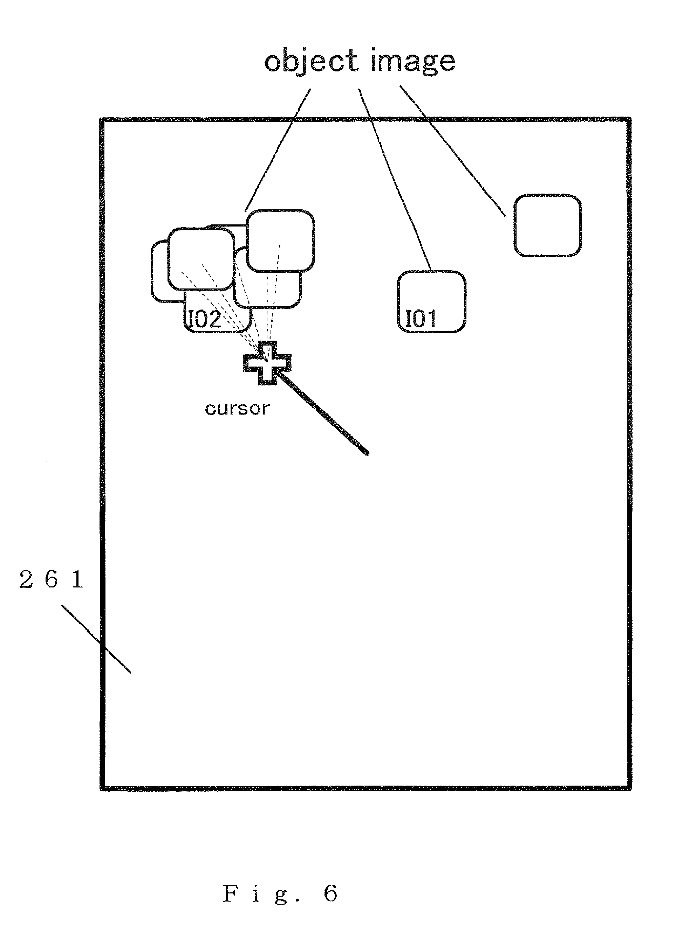

FIG. 6 is a view showing an example of an object screen displayed on the display screen 261 of the map display device 20. In FIG. 6, the map image displayed on the display screen 261 has been omitted. On the map image, object images 101, 102, and the like showing objects such as establishments or buildings located in various positions on the map are drawn on the map image. In detailed maps and the like of urban areas, several objects may be concentrated in limited areas, and images will be displayed overlapping, such as the object image 102.

When the user of the map display device 20 therefore moves the cursor onto a given object and operates (clicks) the cursor to select the image in an attempt to display detailed information, the object image of interest may be difficult to distinguish and it may not be possible to reliably select the image with the cursor if the desired object image is displayed under another object image.

Thus, in the present invention, as noted previously, when the cursor is operated, the distance between the cursor location and the various object images is calculated, and the object image closest to the cursor location is redrawn, whereby the object image is displayed on the uppermost surface of the displayed images. In this way, the object image displayed on the uppermost surface of the screen will always be specified as the object image closest to the cursor.

The user can therefore move the cursor until the desired object image is displayed on the uppermost surface, and the object image will be displayed on the uppermost surface of the display screen, allowing the relevant object image to be readily distinguished. When the user selects the relevant object image to display detailed information, the cursor is furthermore operated and clicked over the object image. In this case, the desired object image will be displayed on the uppermost surface of the display screen, thereby minimizing operating errors such as accidental movement of the cursor onto other object images.

When the cursor is sensed over the desired object image, in the present invention, the cursor display configuration and the display configuration of the object image under the cursor are changed from the ordinary display configuration to emphasized display. Along with that, the change in the cursor display configuration makes it possible to control the display of the window for displaying detailed information on the selected object. It is therefore easier for the user to properly distinguish and select the desired object. The user can also readily recognize errors when the cursor is mistakenly located over an object image that is not desired. Even when an object image that is not desired is thus accidentally clicked (selected), no window for displaying detailed information will be opened, and the user will not be forced to use unnecessary operations to return to the screen.

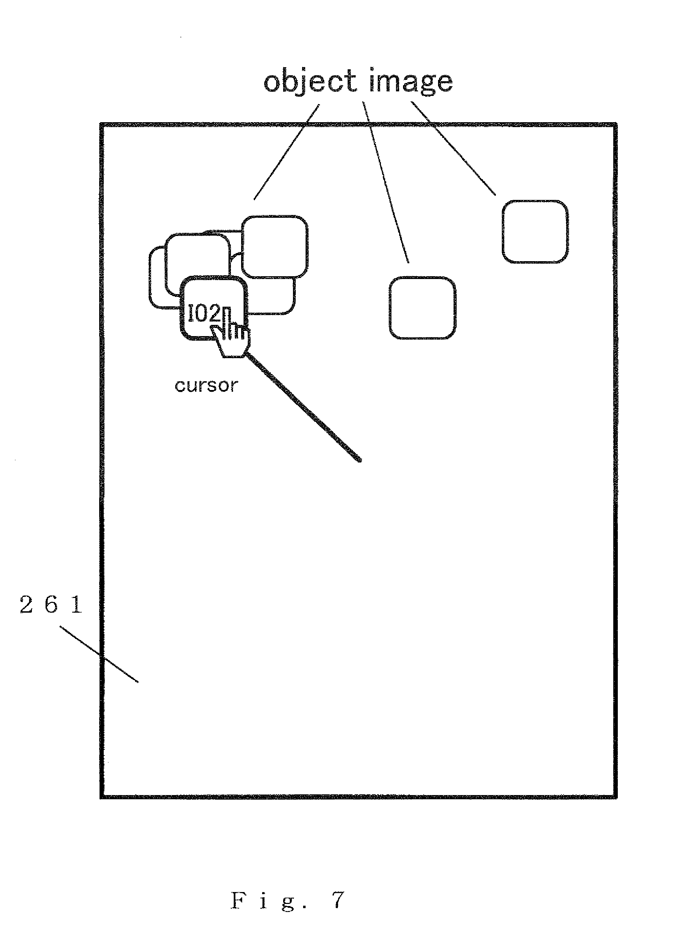

FIG. 7 is a view of an example of the display of an object image displayed through such control. That is, as shown in FIG. 7, the object image 102 nearest the cursor is displayed on the top of the display screen, and when the cursor is furthermore moved thereon, the display configuration of the object image 102 is changed to a display configuration displaying the image in a bold frame, and the cursor display configuration is changed from a cross-shaped image to a pointer image. The change in the cursor display configuration makes it possible to control the display of the window for displaying detailed information on the object.

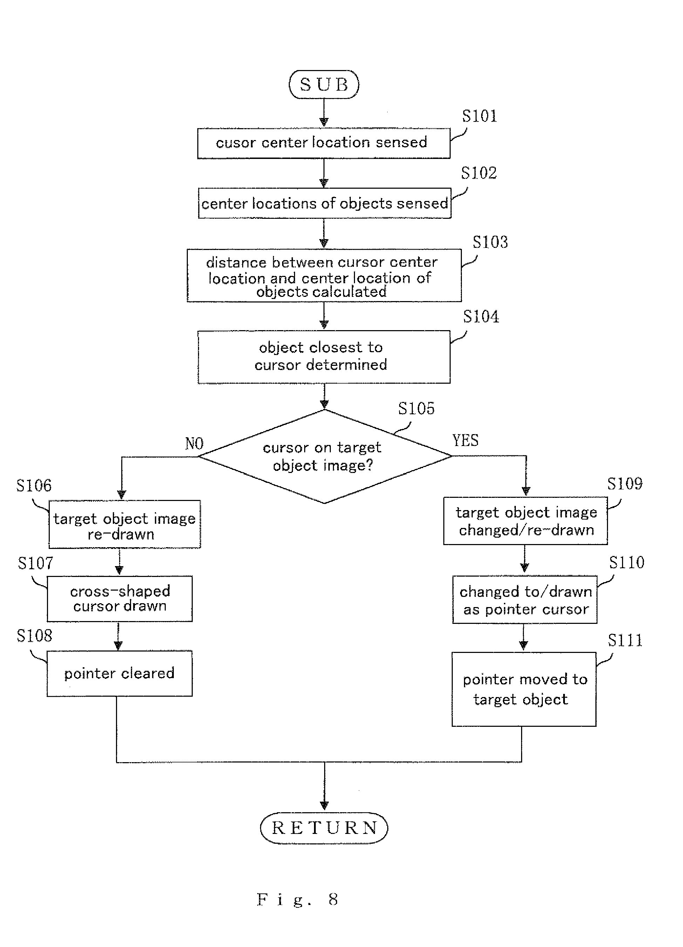

The procedure for displaying object images in the map display device 20 described above will be described below. FIG. 8 is a flowchart showing a sub-routine processing procedure for displaying object images on the map image displayed on the display means 26.

First, the cursor sensing means 29 senses the center position of the cursor in Step S101 of the process, the center position is then calculated with reference to the object data for the various objects shown in FIG. 4 in Step S102 of the process, and the distance between the cursor location and the center position of each object is calculated in Step S103 of the process.

Then, in Step S104 of the process, the target object determination means 281 determines the object having the shortest distance from the cursor (closest to the cursor) as the target object with reference to the distance between the cursor and each object calculated by the cursor sensing means 29. In Step S105 of the process, the cursor sensing means 29 then determines whether the cursor is on the object image of the target object determined in Step S104.

In Step S105 of the determination process, when the cursor sensing means 29 determines that the cursor is not located over the object image of the target object, the process advances to Step S106, and the object display control means 27 re-draws the object image of the target object. As a result of this process, when the cursor is operated, the object image closest to the cursor is displayed on the uppermost surface of the displayed images. In the next Step S107 of the process, the cursor image is drawn using the usual cross-shaped image. In Step S108 of the process, because no object image has been selected, the pointer on the software is cleared (erased) and returned in order to allow the fact that no focus has been placed on (the cursor is not located over) a specific object image to be stored on the software.

Meanwhile, when the cursor sensing means determines that the cursor is located over the object image of the target object in Step S105 of the determination process, the process advances to Step S109, and the object display control means 27 changes the display configuration (changes to an image surrounded by a bold frame in the example in FIG. 7) as shown in FIG. 7 and redraws the object image of the target object. As a result of this process, the target object image closest to the cursor is emphasized and displayed on the uppermost surface in the displayed images and by using a display configuration different from the usual one. That is, the target object image is displayed on the foremost surface of the display screen and is in focus.

Then, in Step S110 of the process, the cursor image is changed from the usual display configuration (cross-shaped image) and drawn using a different display configuration (such as a pointer type of image). With this, the cursor is represented as a pointer mark floating over the target object image in sharp focus. In Step S111 of the process, the pointer on the software is moved and returned to the target object image because it has been distinguished on the software that the target object image is in focus.

By referencing the pointer through this process, it can be seen that the cursor is located over the object image of the target object, and the object image can thus be effectively clicked. That is, the object image is reliably selected, the object image is clicked, and display control of the window for displaying detailed data on the object is enabled (activated).

When the above object image display control is implemented, it will be necessary for the object display control means 27 to draw all the object images present on the map image displayed on the display screen, imposing a significant burden on the drawing process. When the user operates the cursor, it often happens that attention will be devoted to the object images in a specified area on the screen, often with no need to display all of the object images on the screen.

When the cursor sensing means 29 then senses the cursor operation and the direction in which the cursor is moved, the object selection means 282 will select only the object images within a specified range from the cursor location out of the object images to draw, and the object display control means 27 will draw only the object images selected by the object selection means 282, thereby reducing the burden imposed on the object display control means 27 in the drawing process.

When the cursor sensing means 29 senses the cursor operation, the process in Steps S101 through S104 in the flowchart of FIG. 8 is first carried out, and the object nearest to the cursor drawing location is determined as the target object. For example, the distance between the center of the cursor cross and the center coordinates of the object images (POI location) is investigated to specify the closest object image.

The object selection means 282 then selects objects for display in the following manner. That is, it is determined whether the distance from the cursor to the nearest object image (target object) is at or under a certain value. When the distance to the target object is not at or under the certain distance, the object selection means 282 does not select any object because no object images are nearby, and the object display control means 27 ends the process, having drawn only the cursor image (cross-shaped cursor).

Here, the distance between the cursor and the object image is more suitably assessed in terms of the on-screen distance rather than the actual geographical distance, and may be determined, for example, by a numerical value such as a size three times the size of the object image or a number of dots such as xx times dots.

If the distance to the target object is at or under a certain distance, the object selection means 28 selects an object within a certain range, such as within a certain distance, because an object image is nearby; the process in Steps S105 through S111 in the flowchart of FIG. 8 is carried out; and the object image is displayed. In this way, the object images drawn by the object display control means 27 can be reduced.

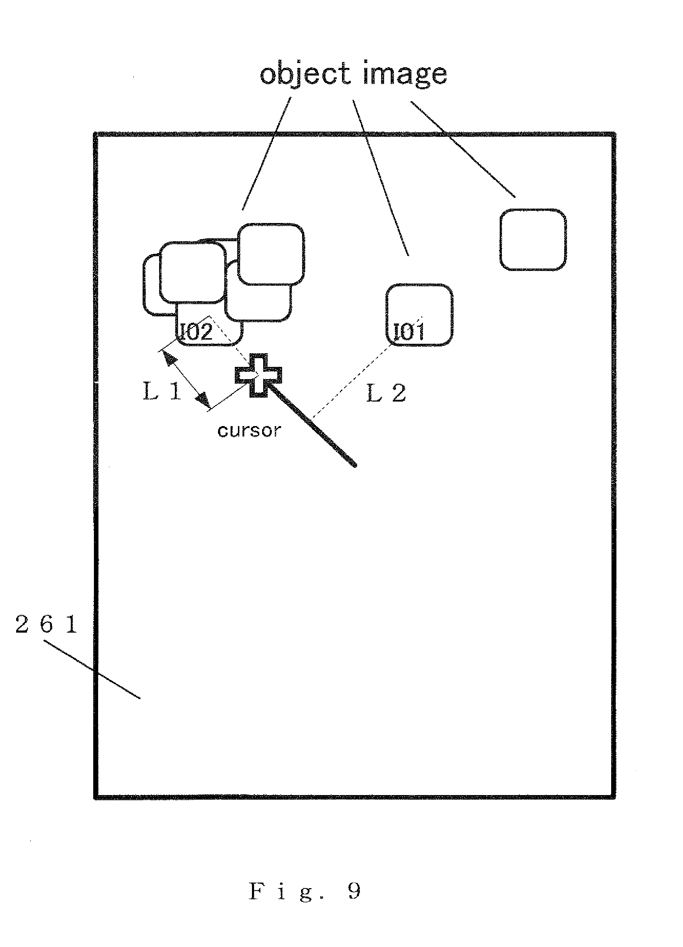

FIG. 9 is a view showing an example of the display of an object image through such control. As shown in FIG. 9, when moved, the cursor first approaches the object image 101, but since the distance L2 from the cursor is at or over a certain distance (L0), the object image is not selected and is not re-drawn. When the cursor is furthermore moved, the object image 102 becomes the object image closest to the cursor, and if the distance L1 from the cursor is at or under a certain distance (L0), the object image 102 is re-drawn and displayed on the uppermost surface of the display screen. It is then determined whether the cursor is above the target object.

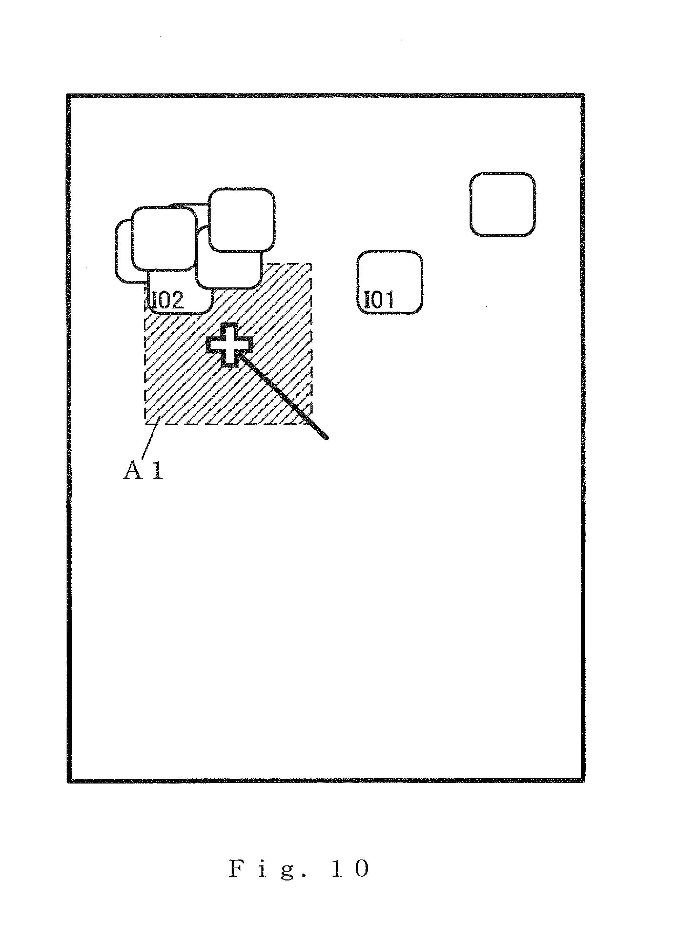

Various methods other than the above can be adopted to select objects by using the object selection means 282. As shown in FIG. 10, for example, it is possible to select only object images within a certain range A1 to dramatically reduce the calculation and the sorting of distances by the cursor sensing means 29. When only object images within a certain range in terms of XY coordinates from the cursor are selected or are further divided into a grid in a large map, it is possible to select object images within the grid in which the cursor is included.

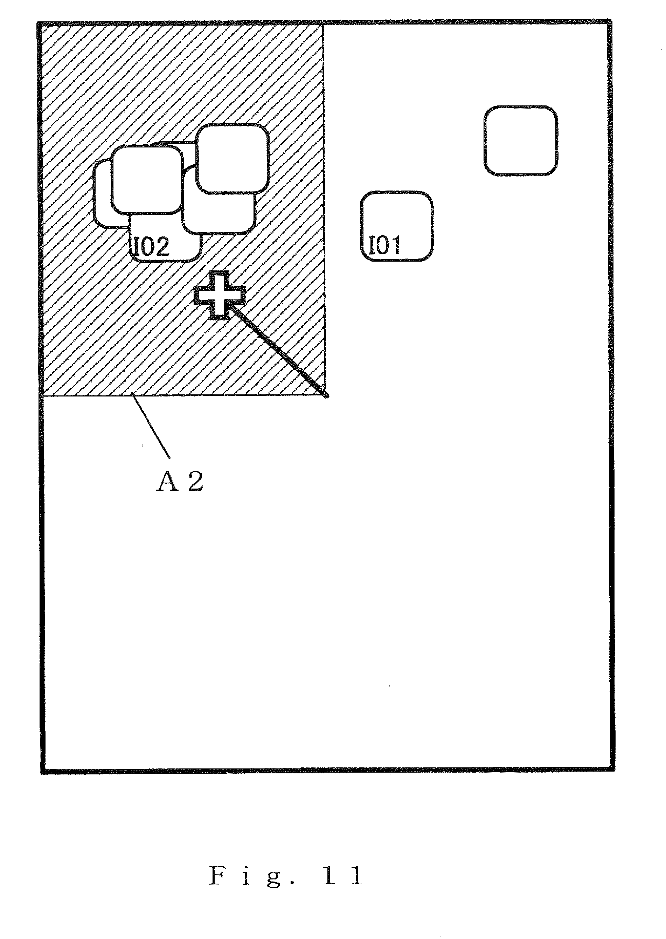

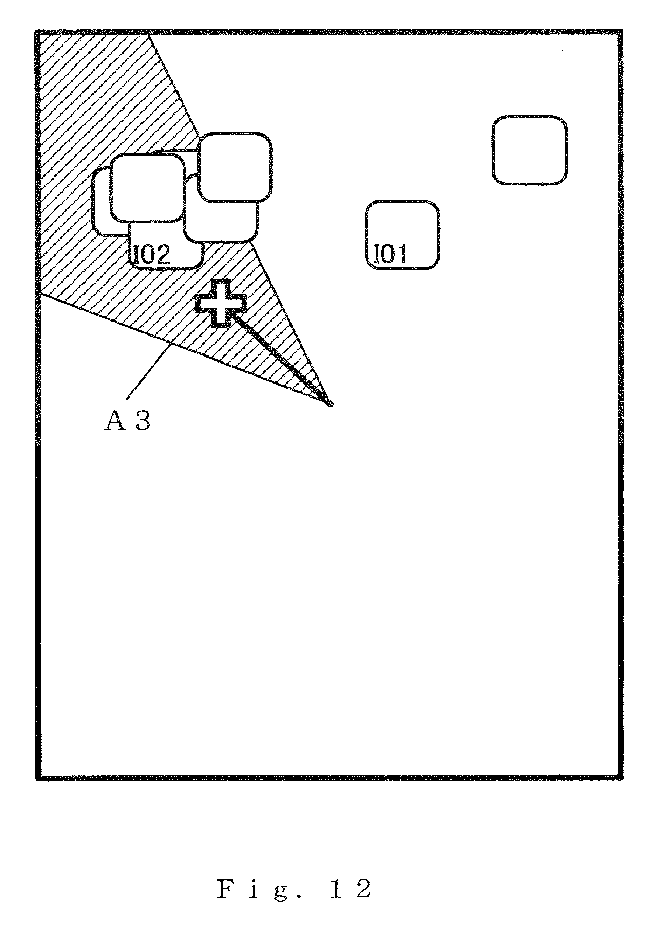

As shown in FIG. 11, the direction in which the cursor is operated and moved (shifted) may be detected by the cursor sensing means 29 to select object images located in that direction. In such cases, since the cursor starts from the center of the display screen, the display screen may be divided into first through fourth quadrants to select object images located within the relevant quadrants. In the case of FIG. 11, since the cursor is moved to the second quadrant, object images located in the area of the second quadrant A2 are selected. Moreover, as shown in FIG. 12, object images targeted within a range where the area A3 is selected based on a certain angle range may be selected in the general direction in which the cursor moves.

The burden imposed in the drawing process or calculating process can be reduced by selecting objects as shown in FIGS. 9 through 12. In the example in FIG. 9, for example, the drawing frequency can be reduced because even the object closest to the cursor will begin to be drawn only within a certain distance from the cursor. It is thus possible to avoid wasteful drawing when there are no objects near the cursor and only icons far away from the cursor are the closest.

According to the methods in FIGS. 10 and 11, target objects can be limited, and the sorting process for determining the object closest to the cursor is therefore reduced.

Furthermore, in the case of FIG. 12, objects can be limited based on the direction in which the objects move, and there is therefore no need to process objects that are particularly far away from the cursor, resulting in good efficiency.

### INDUSTRIAL APPLICABILITY

In the present invention, the map display device is not limited to portable terminals such as mobile telephones and is also applicable to the display of electronic maps on personal computers (PC).

## Claims

1. A map display system for displaying object information related to a certain object when a cursor is moved over a desired object image to select said object image, comprising display means for displaying a map image, and object display control means for displaying object images on the map image according to the locations of the objects, said map display system being
**characterized in that:**
said map display system comprises target object determination means for calculating the distance between a cursor position and the position of each object image to determine the object having the shortest distance; and
said object display control means re-draws the object image of the target object determined by said target object determination means and displays the image on the uppermost surface of the displayed images.

2. The map display system according to claim 1,
**characterized in that:**
when the cursor location is over the object image of said target object, said object display control means changes and redraws said object image and cursor image display configurations, and said cursor operation sensing means enables the display of the object information related to said target object to be controlled.

3. The map display system according to claim 2,
**characterized in that:**
said cursor is a cross-shaped cursor, and when the cursor location is over the object image of said target object, said object image is re-drawn as a display configuration emphasizing the object image, and said cursor display configuration is changed to a pointer image.

4. The map display system according to claim 1,
**characterized in that:**
when said object comprises different objects located in a building of a same establishment, the center position of each object image is set so as to be in a different location; and
said object display control means displays object images based on the location information for each of said object images.

5. A map display device for displaying object information related to a certain object when a cursor is moved over a desired object image to select said object image, comprising display means for displaying a map image, and object display control means for displaying object images on the map image according to the locations of the objects, said map display device being
**characterized in that:**
said map display device comprises target object determination means for calculating the distance between a cursor position and the position of each object image to determine the object having the shortest distance; and
said object display control means re-draws the object image of the target object determined by said target object determination means and displays the image on the uppermost surface of the displayed images.

6. The map display device according to claim 5,
**characterized in that:**
when the cursor location is over said target object image, said object display control means changes and draws said object image and cursor image display configurations, and said cursor operation sensing means enables the display of the object information related to said target object to be controlled.

7. The map display device according to claim 6,
**characterized in that:**
said cursor is a cross-shaped cursor, and when the cursor location is over the object image of said target object, said object image is re-drawn as a display configuration emphasizing the object image, and said cursor display configuration is specified and changed to an image.

8. The map display device according to claim 5,
**characterized in that:**
when said object comprises different objects located in a building of a same establishment, the center position of each object image is set so as to be in a different location; and
said object display control means displays object images based on the location information for each of said object images.

9. A map display method for a map display system for displaying object information related to a certain object when a cursor is moved over a desired object image to select said object image, comprising display means for displaying a map image, and object display control means for displaying object images on the map image according to the locations of the objects,
wherein said map display system comprises target object determination means for calculating the distance between a cursor position and the position of each object image to determine the object having the shortest distance, said map display method being **characterized in** comprising:
a step wherein said target object determination means calculates the distance between a cursor position and the position of each object image to determine the object having the shortest distance; and
a step wherein said object display control means re-draws the object image of the target object determined by said target object determination means and displays the image on the uppermost surface of the displayed images.

10. The map display method according to claim 9, **characterized in** having:
a step wherein, when the cursor sensing means senses that the cursor location is over the object image of said target object, said object display control means changes and draws said object image and cursor image display configurations; and
a step wherein said cursor operation sensing means enables the display of the object information related to said target object to be controlled.

11. The map display method according to claim 10, **characterized in** having:
a step wherein said cursor is a cross-shaped cursor, and when the cursor location is over the object image of said target object, said object display control means produces a display configuration emphasizing the object image of the target object, and specifies and changes said cursor display configuration to an image.

12. The map display method according to claim 9, **characterized in** having:
a step wherein, when said object comprises different objects located in a building of a same establishment, the center position of each object image is set so as to be in a different location; and
said object display control means displays object images based on the location information for each of said object images.

13. A map distribution server for distributing map images to a map display system for displaying object information related to a certain object when a cursor is moved over a desired object image to select said object image, said map display device comprising display means for displaying a map image, and object display control means for displaying object images on the map image according to the locations of the objects, and comprising target object determination means for calculating the distance between a cursor position and the position of each object image to determine the object having the shortest distance, wherein said object display control means re-draws the object image of the target object determined by said target object determination means and displays the image on the uppermost surface of the displayed images, said map distribution server being **characterized in that**:
said map distribution server distributes object images displayed on the map image and the image locations to said map display device.

14. The map distribution server according to claim 13,
**characterized in that:**
when said object comprises different objects located in a building of a same establishments, the center position of the object image of each object is set so as to be in a different location; and
said object images and the location information for each of said object images are distributed to said map display device.
